# EUROPEAN PATENT SPECIFICATION

(11) **EP 0 825 138 B1**
(45) Date of publication and mention of the grant of the patent: **03.12.2003**
(21) Application number: 97305648.4
(22) Date of filing: 28.07.1997
(51) Int. Cl.: B65G 53/26, B65G 53/22

(54) **Particulate material injector**
Vorrichtung zum Injizieren eines pulverförmigen Materials
Injecteur de produits pulvérulents

(30) Priority: 13.08.1996 US 694614
(43) Date of publication of application: 25.02.1998
(73) Proprietor: Shamrock Technologies, Inc., Newark, New Jersey 07114 (US)
(72) Inventor: Neuberg, William B., Perrineville, New Jersey 08535 (US); Galenkamp, Daniel J., Nutley, New Jersey 07110 (US); Cheah, Chun-Wah, Hoboken, New Jersey 07030 (US)
(74) Representative: Gambell, Derek

(56) References cited:
- EP-A- 0 621 078
- WO-A-93/09878
- DE-A- 3 531 927
- DE-A- 3 805 531
- DE-B- 1 253 148
- DE-U- 8 805 947
- FR-A- 1 442 433
- LU-A- 36 955
- NL-A- 7 111 986
- US-A- 4 183 702

## Description

### BACKGROUND OF THE INVENTION

This invention relates to handling particulate material for injecting such material into a processing vessel, such as a reactor, a classifier, an air mill, a screening device or a milling device using an eductor.

One prior art technique for injecting air or gas entrained particulate solid material into a processing vessel at a controlled rate is to provide an eductor having an air or gas nozzle facing an outlet passage to the processing vessel. The eductor may be provided with an upper opening in the shape of a funnel-shaped cup into which the particulate material, such as granular or powdered material, is provided at a controlled rate, such as by a screw conveyor.

Using the prior technique, the upper opening of the eductor allows considerable noise to escape, thereby degrading the working environment for operating personnel. In addition, some materials, particularly in humid conditions may fall into the eductor as clumps, rather than the desired steady trickle, causing irregularities in the instantaneous feed rate. In some applications, such as air mill grinding or air classifying, this clumping may result in non-uniform processing.

United States patent US 4183702 (Bonnel / Societe Colmant Cuvelier Dodge) describes an apparatus for feeding finely powdered material from a silo to a device illustratively a burner, in which the material in the silo is fluidized and extracted through a proportioning device, such as a screw or a distributor with alveoles.

International patent application WO 93/09878 (lskra) describes a device according to the preamble of claim 1 for drawing off powder from a container, the device having a pneumatic conveyor. The conveyor is linked to the container by a drawing-off pipe. Part of the wall of the drawing off pipe is porous, so that air can enter inside the container when powder is withdrawn therefrom.

It is an object of the present invention to provide a method and apparatus for injecting particulate material into a processing vessel at a controlled constant rate.

It is another object of the present invention to improve the consistency of output of the injected particulate material.

It is yet another object of the present invention to inject the particulate material into the processing apparatus more efficiently, thereby reducing production costs.

It is a further object of the present invention to provide an apparatus for injecting the particulate material which saves energy.

It is yet a further object of the present invention to provide an apparatus for injecting the particulate material which improves production rates.

### SUMMARY OF THE INVENTION

The objects of the invention are solved by providing an apparatus for injecting particulate material into a processing vessel comprising the features of the characterizing part of claim 1.

In accordance with the invention there is also provided a method for injecting particulate material to a processing vessel according to claim 4.

For a better understanding of the present invention, together with other and further objects, reference is made to the following description, taken in conjunction with the accompanying drawings, and its scope will be pointed out in the appended claims.

### BRIEF DESCRIPTION OF THE DRAWINGS

Figure 1 is a plan elevation view of a particulate material injecting apparatus in accordance with the present invention.
Figure 2 is a plan elevation view of a chamber used in the Figure 1 apparatus.
Figure 3 is a top view of the Figure 2 chamber.
Figure 4 is a bottom view of the Figure 2 chamber.
Figure 5 is a partial cross-sectional view of the Figure 1 apparatus.
Figure 6a and Figure 6b are graphs showing noise level of the apparatus of the present invention compared to noise level of a prior art apparatus.

### DESCRIPTION OF THE PREFERRED EMBODIMENT

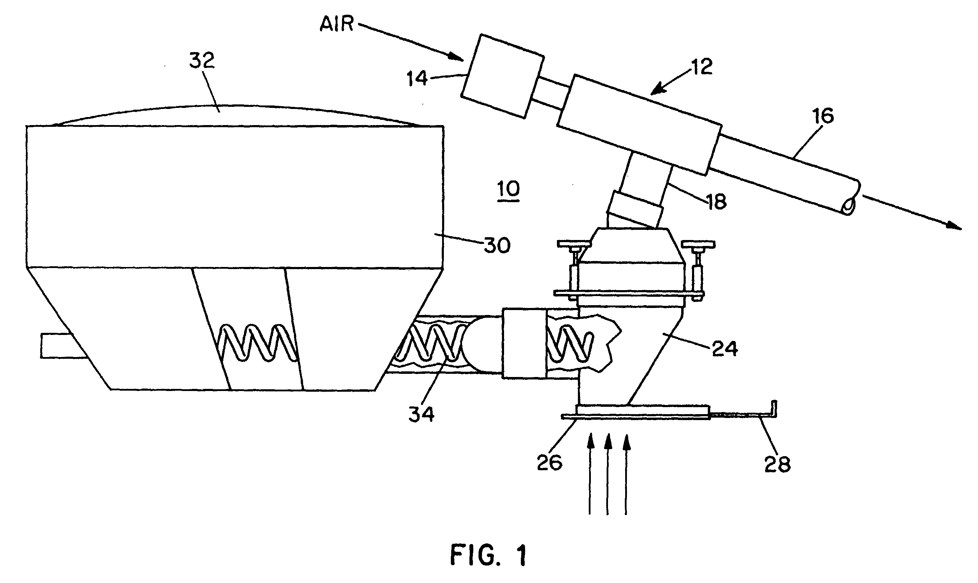

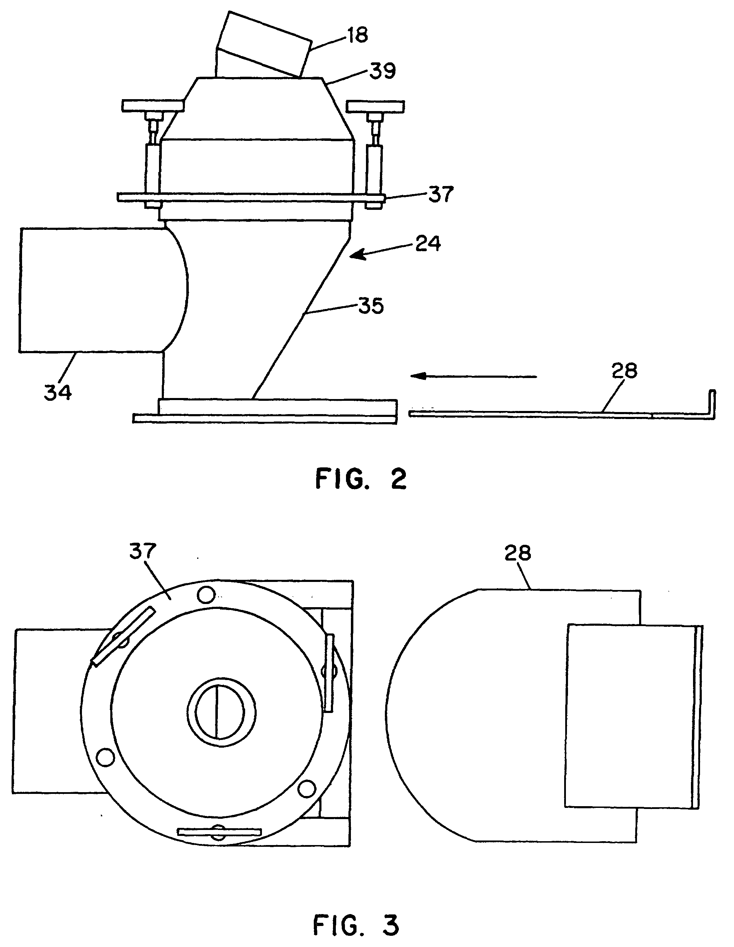

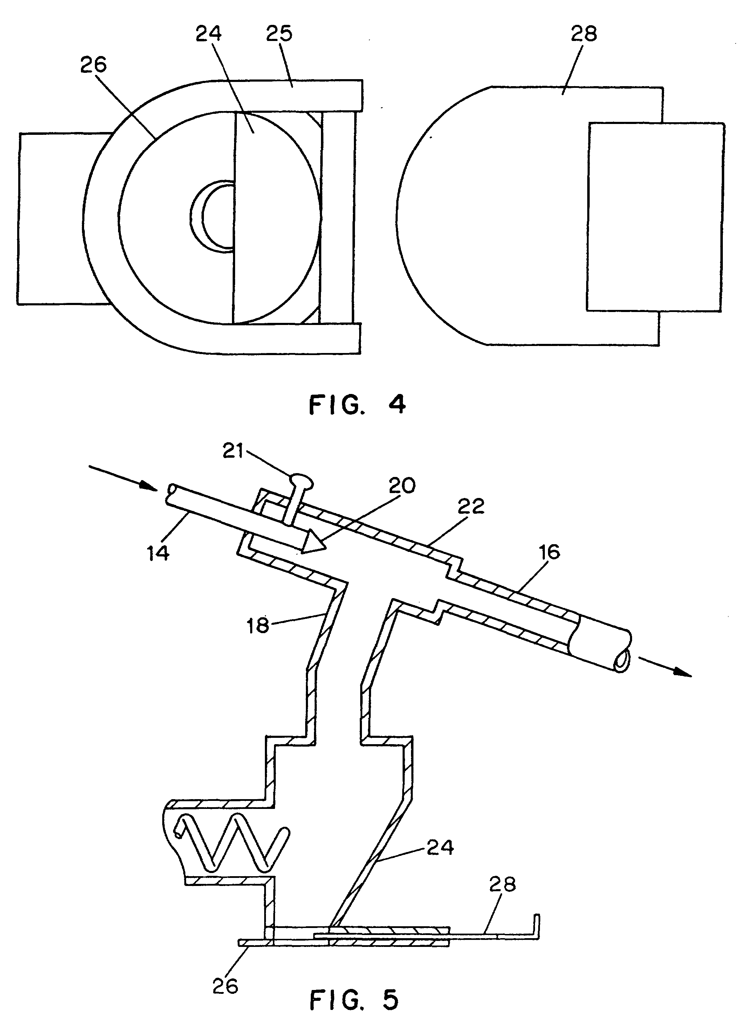

Figure 1 is a drawing of a particulate material injecting apparatus 10 according to the present invention. The apparatus 10 includes an eductor 12 which has an air inlet 14, an outlet passage 16 and a vacuum inlet passage 18. As shown in the cross-sectional view of Figure 5, high pressure air, for example 552 to 621 kPa relative to atmospheric pressure (80-95 PSIG), is supplied to a nozzle 20 within eductor housing 22. Nozzle 20 has an opening of about 1.6 to 6.4 mm (1/16 to 1/4 inch) and delivers air at about 2.832 m³ (100 cubic feet) per minute. The nozzle 20 is held in place by a screw 21. The high pressure air nozzle 20 faces an outlet passage 16 having about 38.1 mm (1½ inch) diameter whereby a vacuum is created in housing 22 drawing air through vacuum inlet passage 18 according to principles well known in the art. Vacuum inlet passage 18 is connected to a fluidizing chamber 24 which has an air inlet opening 26 at its lower end. A slide closure 28 is arranged in a flange 25 at the lower end of chamber 24 enabling the size of opening 26 to be manually adjusted by moving slide closure 28 in and out as indicated in Figure 2. Figures 3 and 4 are top and bottom views of chamber 24 showing the arrangement of slide closure 28.

While the shape of chamber 24 is not critical, it has been shown to be advantageous to provide a generally cylindrical shape of about 152.4 mm (six inches) in diameter and about 228.6 to 279.4 mm (9 to 11 inches) in height. The chamber 24 includes an inlet screw conveyor 34 entering one side and a planar back wall 35 which tapers the cross-sectional area to approximately one-half at the lower end. The chamber 24 may be provided with a central flange 37 for disassembly and a conical upper portion 39 leading to vacuum inlet passage 18.

Referring again to Figure 1 there is provided a material containment hopper 30 in which particulate material 32 is provided. A screw conveyor arrangement 34 conducts the particulate material 32 from the lower end of the hopper 30 into the fluidizing chamber 24. The rate at which the screw 34 is turned regulates the rate of material supplied to the fluidizing chamber 24. A conveyor belt or vibrator (not shown) can also be used in place of the screw conveyor arrangement 34.

Operation of the apparatus provides for a smooth and constant supply of already fluidized particle containing air to the eductor 12 for subsequent injection into a processing vessel, such as an air mill or reactor. As material is conveyed to chamber 24 upwardly moving air drawn through opening 26 entrains and thoroughly mixes the particles in the air whereby the entrained particles and air are drawn through vacuum inlet passage 18 into eductor 12. In eductor 12 the particle containing fluidized air from chamber 24 becomes mixed with injector air from the compressed air source and is injected at high speed through outlet passage 16 into a processing vessel.

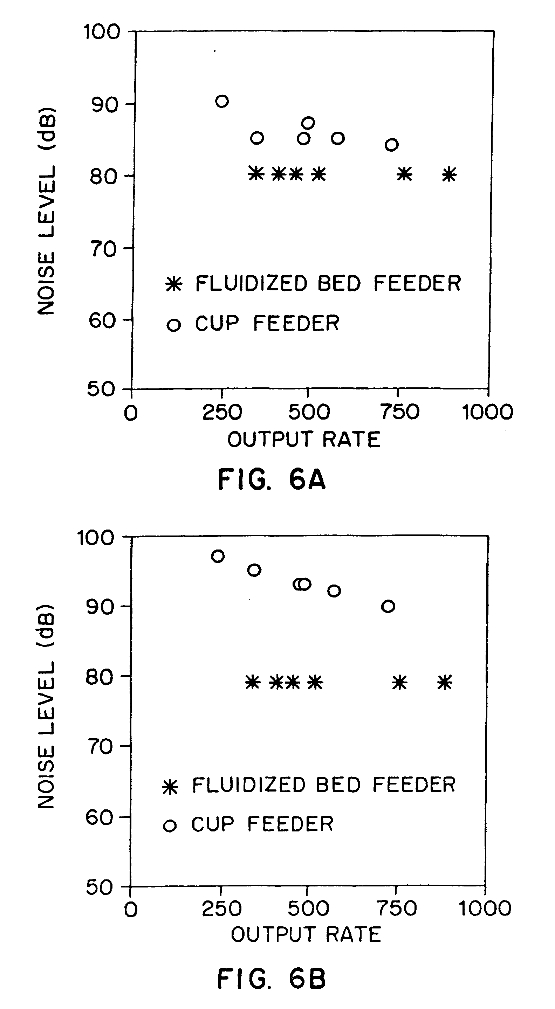

Figures 6a and 6b exemplify one beneficial effect of the injection device of the present invention, when used with an air mill, as compared to a previous process of supplying material directly from a screw conveyor into a funnel-shaped cup arranged above an opening in the eductor. The data recorded in Figure 6a shows measured noise level at 1.829 m (6 feet) from the apparatus; Figure 6b shows noise level at 304.8 mm (1 foot) from the apparatus, both indicated significant and beneficial reductions in ambient noise level using the apparatus of the present invention.

Another benefit of the invention arises out of the fact that the hopper of granular feedstock need not be located above the eductor as in the prior art, but can be more conveniently located near the lower end of the chamber 24. This facilitates resupply of material to the hopper.

## Claims

1. Apparatus (10) for injecting particulate material (32) into a processing vessel comprising a source of compressed gas; a fluidizing chamber (24), an eductor (12) having an input nozzle (20) connected to said compressed gas source, an outlet passage (16) connected to said processing vessel, and a vacuum inlet passage (18) connected to said fluidizing chamber (24) situated below said eductor (12); said fluidizing chamber (24) comprises a gas inlet opening (26) at the bottom, whereby fluidizing gas is drawn upward in said fluidizing chamber.(24) entraining said particulate material (32); and a hopper (30) for holding said particulate material (32) **characterised by** a screw conveyor (34) located in the side of said fluidizing chamber (24) for conveying said particulate material (32) from the lower end of the hopper (30) into said fluidizing chamber (24).

2. Apparatus as specified in claim 1, wherein said processing vessel is an air mill.

3. Apparatus (10) as specified in claim 1 or 2, wherein said gas inlet opening (26) of said fluidizing chamber (24) includes an adjustable slide closure (28) for varying the size of the opening therein.

4. A method for injecting particulate material (32) into a processing vessel comprising holding said particulate material (32) in a hopper (30), conveying said particulate material (32) to a fluidizing chamber (24) using a screw conveyor (34), fluidizing said particulate material (32) in an upwardly moving gas stream in said fluidizing chamber (24), drawing said fluidized particulate material (32) from said fluidizing chamber (24) into an eductor (12) wherein said eductor (12) has an input nozzle (20) connected to a compressed gas source, an outlet passage (16) connected to said processing vessel and a vacuum inlet passage (18) connected to the fluidizing chamber (24) situated below the eductor (12), and injecting said particulate material (32) into said processing vessel with said eductor (12).

## Patentansprüche

1. Vorrichtung (10) zum Injizieren eines pulverförmigen Materials (32) in einen Verarbeitungsbehälter, bestehend aus einer Kompressionsgasquelle; einer Verflüssigungskammer (24), einer Gasstrahlpumpe (12) mit einer Einspritzdüse (20), die mit besagter Kompressionsgasquelle verbunden ist, einem Auslassstutzen (16), der mit besagtem Verarbeitungsbehälter verbunden ist, und einem Vakuumeinlassstutzen (18), der mit besagter Verflüssigungskammer (24) verbunden ist, die sich unter besagter Gasstrahlpumpe (12) befindet; die besagte Verflüssigungskammer (24) umfasst eine Gaseinlassöffnung (26) am Boden, durch welche Verflüssigungsgas nach oben in besagte Verflüssigungskammer (24) gesaugt wird und dabei besagtes pulverförmiges Material (32) mitgerissen wird; sowie ein Aufgabetrichter (30) zur Aufbewahrung des besagten pulverförmigen Materials (32), charakterisiert durch eine Förderschnecke (34), welche sich seitlich in der Wand besagter Verflüssigungskammer (24) zum Transport besagten pulverförmigen Materials (32) vom unteren Ende des Aufgabetrichters (30) in besagte Verflüssigungskammer (24) befindet.

2. Vorrichtung nach Anspruch 1, wobei es sich bei besagtem Verarbeitungsbehälter um eine Luftstrahlmühle handelt.

3. Vorrichtung (10) nach Anspruch 1 oder 2, wobei besagte Gaseinlassöffnung (26) der besagten Verflüssigungskammer (24) einen verstellbaren Schiebeverschluss (28) aufweist, mit dem die Größe der Öffnung verändert werden kann.

4. Ein Verfahren zum Injizieren eines pulverförmigen Materials (32) in einen Verarbeitungsbehälter, bestehend aus der Aufbewahrung besagten pulverförmigen Materials (32) in einem Aufgabetrichter (30), dem Transport besagten pulverförmigen Materials (32) in eine Verflüssigungskammer (24) mittels einer Förderschnecke (34), der Verflüssigung besagten pulverförmigen Materials (32) in einem sich aufwärts bewegenden Gasstrom in besagter Verflüssigungskammer (24), dem Saugen des besagten verflüssigten pulverförmigen Materials (32) aus besagter Verflüssigungskammer (24) in eine Gasstrahlpumpe (12), wobei besagte Gasstrahlpumpe (12) eine Einspritzdüse (20) aufweist, die an eine Kompressionsgasquelle angeschlossen ist, sowie einen Auslassstutzen (16), der mit besagtem Verarbeitungsbehälter verbunden ist, und einem Vakuumeinlassstutzen (18), der mit der Verflüssigungskammer (24) verbunden ist, die sich unter der Gasstrahlpumpe (12) befindet, und dem Injizieren besagten pulverförmigen Materials (32) in besagten Verarbeitungsbehälter mit besagter Gasstrahlpumpe (12).

## Revendications

1. Dispositif (10) pour injecter une matière particulaire (32) dans un récipient de traitement comportant une source de gaz comprimé, une chambre de fluidisation (24), un éjecteur (12) ayant une buse d'entrée (20) connectée à ladite source de gaz comprimé, un passage de sortie (16) connecté audit récipient de traitement, et un passage d'entrée de vide (18) connecté à ladite chambre du fluidisation (24) situé en dessous dudit éjecteur (12), ladite chambre de fluidisation (24) comporte une ouverture d'entrée de gaz (26) au niveau de la partie inférieure, de sorte qu'un gaz de fluidisation est attiré vers le haut dans ladite chambre de fluidisation (24) et entraînant ladite matière particulaire (32), et une trémie (30) pour contenir ladite matière particulaire (32), **caractérisé par** un convoyeur à vis (34) positionné du côté de ladite chambre de fluidisation (24) pour transporter ladite matière particulaire (32) à partir de l'extrémité inférieure de la trémie (30) jusque dans ladite chambre de fluidisation (24).

2. Dispositif selon la revendication 1, dans lequel ledit récipient de traitement est un broyeur à air.

3. Dispositif (10) selon la revendication 1 ou 2, dans lequel ladite ouverture d'entrée de gaz (26) de ladite chambre de fluidisation (24) comporte une fermeture coulissante ajustable (28) pour modifier la dimension de l'ouverture dans celle-ci.

4. Procédé pour injecter une matière particulaire (32) dans un récipient de traitement comportant les étapes consistantes à maintenir ladite matière particulaire (32) dans une trémie (30), transporter ladite matière particulaire (32) vers une chambre de fluidisation (24) en utilisant un convoyeur à vis (34), fluidiser ladite matière (32) dans un flux de gaz se déplaçant vers le haut dans ladite chambre de fluidisation (24), attirer ladite matière particulaire fluidisée (32) à partir de ladite chambre de fluidisation (24) dans un éjecteur (12), ledit éjecteur (12) ayant une buse d'entrée (20) connectée à une source de gaz comprimé, un passage de sortie (16) connecté audit récipient de traitement et un passage d'entrée de vide (18) connecté à la chambre de fluidisation (24) située en dessous de l'éjecteur (12), et injecter ladite matière particulaire (32) dans ledit récipient de traitement à l'aide dudit éjecteur (12).
